# DEMANDE DE BREVET EUROPEEN

(11) **EP 4 560 972 A1**
(43) Date de publication de la demande: **28.05.2025**
(21) Numéro de dépôt: 24213772.7
(22) Date de dépôt: 19.11.2024
(51) Int. Cl.: H04L 9/08, H04L 9/32, G07C 9/00

(54) **AUTHENTIFICATION AVEC UNE COMMUNICATION EN CHAMP PROCHE SECURISÉE**

(30) Priorité: 22.11.2023 FR 2312894
(71) Demandeur: Commissariat à l'Energie Atomique et aux Energies Alternatives, 75015 Paris (FR)
(72) Inventeur: HENNEBERT, Christine, 38054 GRENOBLE CEDEX 09 (FR)
(74) Mandataire: Cabinet Beaumont

(57) **Abrégé**

La présente description concerne un procédé comprenant :
- la génération, par un premier dispositif, d'un premier et d'un deuxième éléments ;
- la fourniture du premier élément, à un deuxième dispositif ;
- la génération, par le deuxième dispositif d'une première clef publique ;
- la fourniture de la première clef publique au premier dispositif ;
- la génération, par le premier dispositif, d'une clef de session ;
- la génération, par le premier dispositif, d'un premier code, et son chiffrement par la clef de session ;
- la génération, par le premier dispositif, d'une deuxième clef publique ;
- la fourniture du premier code chiffré et de la deuxième clef publique au deuxième dispositif ;
- la génération, par le deuxième dispositif, de la clef de session et le déchiffrement du premier code chiffré ;
- la commande d'un actionneur sur la base de la première clef publique.

## Description

### Domaine technique

La présente description concerne de façon générale les procédés de communication en champs proche entre deux dispositifs, plus particulièrement les procédés d'échange de clefs par communication en champ proche.

### Technique antérieure

Certains services, tels que par exemple une location de casier, une location de logement à la nuit, la mise à disposition d'un parcage sécurisé pour un véhicule tel qu'un vélo etc., requièrent une authentification entre l'utilisateur du service et le matériel.

L'authentification peut s'effectuer par l'intermédiaire de l'exécution d'une application client, par exemple installée sur un smartphone de l'utilisateur. Cependant, dans certains cas d'utilisation, il peut être souhaitable que l'exécution de l'application et/ou la communication entre le smartphone de l'utilisateur et le dispositif matériel puisse s'effectuer en zone blanche, c'est à dire sans connexion à un quelconque réseau.

De plus, il peut être souhaitable que l'utilisateur puisse s'authentifier auprès de plusieurs dispositifs matériels.

Cependant, l'authentification, par l'intermédiaire d'une application non sécurisée, est généralement sujette aux cyber-attaques telles que, par exemple, les attaques par rejeu, les attaques par spoofing, les attaque par relais, ou les attaques par l'homme du milieu.

Il existe un besoin d'améliorer les procédés d'authentification entre deux dispositifs. En particulier, il existe un besoin de rendre les procédés d'authentification, s'effectuant par l'intermédiaire d'une application non sécurisée, plus robustes face aux cyber-attaques.

### Résumé de l'invention

Un mode de réalisation prévoit un procédé d'authentification entre un premier dispositif et un deuxième dispositif, le procédé comprenant :
- la génération, par le premier dispositif, d'un premier élément et d'un deuxième élément, et leur stockage dans une mémoire du premier dispositif ;
- la fourniture du premier élément, par l'intermédiaire d'un utilisateur du premier dispositif, au deuxième dispositif ;
- la génération, par le deuxième dispositif, sur la base du premier élément et par application d'un protocole de Diffie-Hellman, d'une première clef publique ;
- la fourniture de la première clef publique au premier dispositif et le stockage de la première clef publique, en association des premier et deuxième éléments, dans une mémoire du premier dispositif ;
- la génération, par le premier dispositif, d'une clef de session, sur la base du deuxième élément et de la première clef publique, par application d'un protocole de Diffie-Hellman sur une courbe elliptique ;
- la génération, par le premier dispositif, d'un premier code, sur la base du deuxième élément, et son chiffrement par la clef de session ;
- la génération, par le premier dispositif, d'une deuxième clef publique ;
- la fourniture, par une communication en champs proche, du premier code chiffré et de la deuxième clef publique au deuxième dispositif ;
- la génération, par le deuxième dispositif, de la clef de session, sur la base du premier élément et de la deuxième clef publique, et le déchiffrement du premier code chiffré, à l'aide de la clef de session ;
- le stockage, dans une mémoire du deuxième dispositif, du premier code déchiffré ;
- la commande, par le deuxième dispositif, d'un premier actionneur suite à une authentification du deuxième dispositif, ou d'un troisième dispositif, par le premier dispositif et sur la base de la première clef publique.

Selon un mode de réalisation, le procédé ci-dessus comprend en outre:
- la génération, par le premier dispositif, d'un deuxième code, sur la base du deuxième élément, et son chiffrement par la clef de session et la fourniture, par communication en champs proche, du deuxième code chiffré au deuxième, ou au troisième, dispositif ;
- le déchiffrement, par le deuxième, ou le troisième, dispositif, du deuxième code chiffré et la comparaison du deuxième code déchiffré avec le premier code déchiffré ;
- sur la base de la comparaison entre les premier et deuxième codes déchiffrés, la commande, par le deuxième dispositif ou par le troisième dispositif, du premier ou d'un deuxième actionneur.

Selon un mode de réalisation, la commande du premier actionneur provoque une action de verrouillage, ou de déverrouillage, du deuxième dispositif et la commande du deuxième actionneur provoque une action de déverrouillage, ou de verrouillage du deuxième, ou du troisième, dispositif.

Selon un mode de réalisation, la première clef publique est fournie, par le deuxième dispositif, au premier dispositif par l'intermédiaire d'une communication en champs proche non sécurisée.

Selon un mode de réalisation, le premier élément est un code numérique et dans lequel la fourniture du premier élément au deuxième dispositif, par l'intermédiaire de l'utilisateur consiste en la saisie, par l'utilisateur, du code numérique sur un clavier du deuxième dispositif.

Selon un mode de réalisation, le premier élément est un code à réponse rapide et dans lequel la fourniture du premier élément au deuxième dispositif, par l'intermédiaire de l'utilisateur consiste en la présentation du code à réponse rapide à un lecteur de code à réponse rapide du deuxième dispositif.

Selon un mode de réalisation, le deuxième élément est une valeur aléatoire comprenant un nombre N de mots compris dans un dictionnaire standard de mots encodant de l'entropie, par exemple la proposition d'amélioration du BitCoin 39, N étant un entier compris entre 3 et 24.

Selon un mode de réalisation, la clef de session est effacée des premier et deuxième dispositifs suite à la réalisation de la première action, et dans lequel la clef de session est générée à nouveau, par le premier dispositif, puis par le deuxième, ou le troisième, dispositif, suite à l'authentification du deuxième, ou du troisième, dispositif, par le premier dispositif.

Selon un mode de réalisation, le procédé ci-dessus comprend en outre, avant la génération, par le premier dispositif, de la clef de session, l'authentification du deuxième dispositif, par le premier dispositif et sur la base de la première clef publique et sur la base d'une clef maitre.

Selon un mode de réalisation, le procédé ci-dessus comprend en outre, avant la réalisation de la première action :
- le chiffrement, par le deuxième dispositif, du premier élément, et la fourniture du premier élément chiffré au premier dispositif ;
- le déchiffrement, par le premier dispositif, du premier élément chiffré et la comparaison entre le premier élément déchiffré et le premier élément ; et
- si le premier élément déchiffré et le premier élément ne correspondent pas, l'arrêt du procédé.

Selon un mode de réalisation, le procédé ci-dessus comprend en outre suite à la génération du premier code, la fourniture d'un code d'authentification de message au deuxième dispositif.

Selon un mode de réalisation, le code d'authentification de message est une des coordonnées, sur la courbe elliptique, de la clef de session.

Selon un mode de réalisation, le procédé ci-dessus comprend en outre, suite à la fourniture du premier code chiffrés et/ou du deuxième code chiffré :
- l'estimation, par le deuxième, ou le troisième, dispositif, du temps écoulé entre l'envoi, par le premier dispositif du code chiffré et la réception, par le deuxième dispositif, du code chiffré ;
- la comparaison, par le deuxième, ou le troisième, dispositif, du temps écoulé estimé et une valeur seuil ; et
- si le temps écoulé estimé est supérieur ou égal à la valeur seuil, l'arrêt du procédé.

Selon un mode de réalisation, le premier code est une concaténation d'une première partie d'une valeur générée sur la base du deuxième élément avec une deuxième partie de la valeur et dans lequel le deuxième code est une concaténation de la première partie de la valeur avec une troisième partie de la valeur.

Un mode de réalisation prévoit un système comprenant un premier et un deuxième dispositifs configurés pour réaliser le procédé ci-dessus.

Selon un mode de réalisation, le premier dispositif est un téléphone intelligent.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre un exemple d'une authentification entre au moins un utilisateur et une borne à vélo selon un mode de réalisation de la présente description ;
la figure 2 illustre une communication en champs proche entre deux dispositifs ;
la figure 3A illustre l'émulation d'une communication en champ proche par un dispositif comprenant un élément sécurisé ;
la figure 3B illustre l'émulation d'une communication en champ proche par un dispositif comprenant une carte d'émulation, selon un mode de réalisation de la présente description ;
la figure 4 illustre un exemple d'une cyber-attaque sur une communication sans fil entre deux dispositifs ;
la figure 5 est un schéma par bloc illustrant un système configuré pour mettre en oeuvre un procédé d'authentification, selon un mode de réalisation de la présente description ;
la figure 6A est un organigramme illustrant des étapes d'un procédé d'authentification, selon un mode de réalisation de la présente description ; et
la figure 6B est un organigramme illustrant des étapes d'un procédé d'authentification, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les protocoles d'échanges de clefs ne sont pas décrits en détails. En particulier, les protocoles d'échanges de clefs Diffie-Hellman, basés sur la cryptographie sur des courbes elliptiques, sont connus par la personne du métier et ne sont pas détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

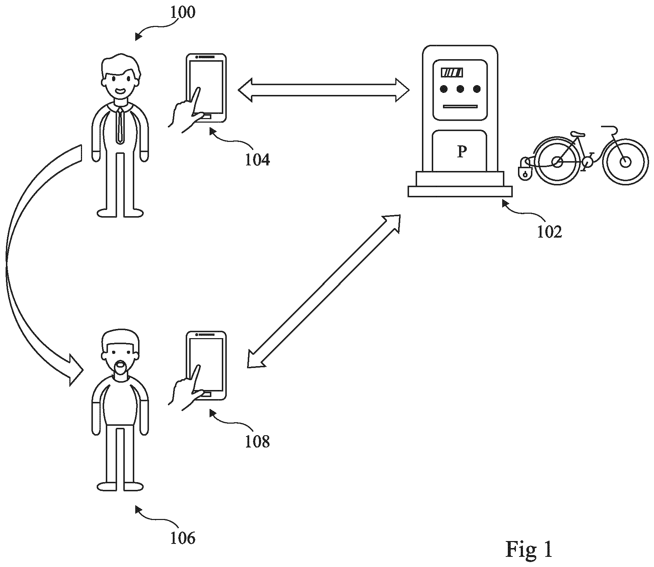

La figure 1 illustre un exemple d'une authentification entre au moins un utilisateur 100 et une borne de stationnement à vélo 102 selon un mode de réalisation de la présente description.

A titre d'exemple, l'utilisateur 100 souhaite parquer son vélo temporairement sur la borne 102. L'authentification entre l'utilisateur 100 et la borne 102 permet par exemple de verrouiller le vélo dans la borne afin de le protéger. La borne 102 est, par exemple, configurée pour déverrouiller le vélo lorsque l'utilisateur 100 souhaite le récupérer.

En particulier, l'authentification s'effectue par l'intermédiaire de l'utilisation d'un smartphone 104. A titre d'exemple, le smartphone 104 comprend une application client permettant à l'utilisateur 100 de s'authentifier auprès de la borne 102. La borne 102 comprend par exemple une carte électronique configurée pour effectuer des opérations cryptographiques selon un mode de réalisation de la présente description.

Selon un mode de réalisation, la communication entre le smartphone 104 et la borne 102 est une communication sans fil ne nécessitant pas que le smartphone soit connecté à un réseau. A titre d'exemple, la communication entre le smartphone 104 et la borne 102 est une communication en champ proche (en anglais « Near Field Communication » - NFC). A titre d'exemple, la borne 102 comprend un lecteur de signal radio NFC, configuré pour recevoir des signaux radio transmis par le smartphone 104.

Selon un mode de réalisation, une fois le vélo verrouillé dans la borne 102, l'utilisateur 100 a la possibilité de permettre à un autre utilisateur 106 de récupérer le vélo, et par conséquent de commander le déverrouillage du vélo. A titre d'exemple, le déverrouillage du vélo par l'autre utilisateur 106 s'effectue par l'intermédiaire d'un smartphone 108, sur lequel l'application client est installée.

Selon un mode de réalisation, chaque authentification entre l'utilisateur 100 et la borne 102 est unique. C'est à dire que lorsque l'utilisateur 100 a, par exemple, récupéré son vélo, l'authentification effectuée est oubliée, par la borne 102 et par le smartphone 104. Ainsi, chaque nouvelle réauthentification entre l'utilisateur 100 et la borne 102 s'effectue comme si aucune authentification n'avait jamais eu lieu.

Selon un mode de réalisation, l'utilisateur 100 a la possibilité de s'authentifier, par exemple simultanément, auprès de plusieurs bornes similaires à la borne 102. De même, d'autres utilisateurs que l'utilisateur 100 ont la possibilité de s'authentifier auprès de la borne 102, lorsque celle-ci est libre.

Bien que l'exemple illustré par la figure 1 présente une borne à vélo, d'autres dispositifs sont bien sûr envisageables. A titre d'exemple, dans le même contexte de verrouillage-déverrouillage, le dispositif avec lequel l'utilisateur s'authentifie est, par exemple, un casier pour stocker des affaires dans un lieu publique tel qu'une piscine, un musée, un supermarché, etc.

Dans un autre exemple, l'authentification s'effectue auprès d'une borne de stationnement, par exemple de véhicule en libre-service tels que des vélos, des trottinettes ou des voitures. Dans cet exemple, l'authentification permet par exemple de déverrouiller un véhicule stationné puis de le verrouiller, par exemple dans une borne de stationnement différente de celle utilisée pour le déverrouillage.

Encore dans un autre exemple, l'authentification s'effectue, par exemple, entre deux smartphones. Dans cet exemple, l'authentification est par exemple réalisée à l'entrée d'un musée ou d'un lieu touristique. A titre d'exemple, l'utilisateur s'authentifie à l'entrée, puis à la sortie. A titre d'exemple, l'authentification à l'entrée, puis à la sortie permet d'établir une facturation au temps passé.

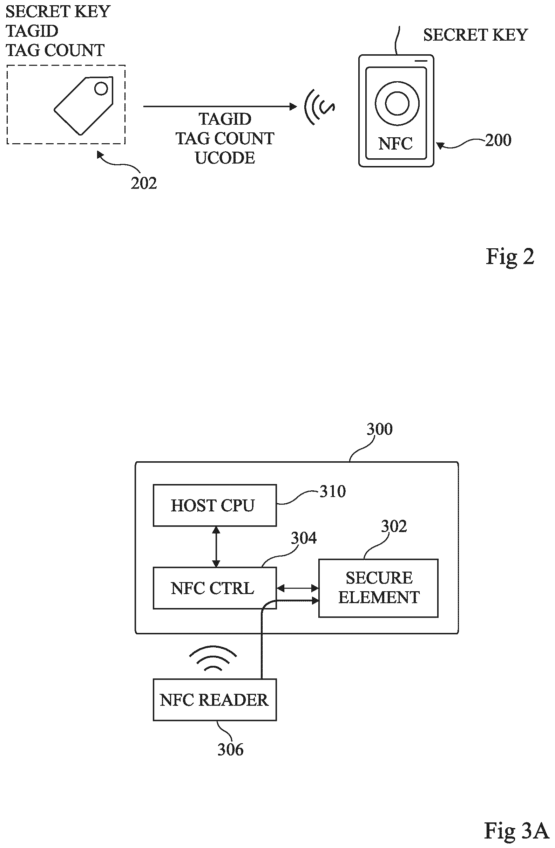

La figure 2 illustre un protocole de communication en champs proche entre deux dispositifs 200 et 202. En particulier la figure 2 illustre la vérification, par un dispositif lecteur 200 de l'authenticité d'un tag NFC transmis par une puce électronique 202.

A titre d'exemple, le lecteur 200 est alimenté et émet un signal radio. Lorsque la puce électronique 202 est à portée du signal radio émis par le lecteur 200, la puce 202 est par exemple alimentée par le signal radio.

La puce électronique 202 est configurée pour fournir un message au lecteur 200. A titre d'exemple, le message comprend un identifiant (TAGID), une valeur de comptage (TAGCOUNT) et un code chiffré (UCODE). A titre d'exemple, le code chiffré dépend de la valeur de l'identifiant et de la valeur de comptage. A titre d'exemple, le code chiffré a été chiffré par l'intermédiaire d'une clef secrète (SECRETKEY) connue par la puce 202. Le lecteur 200 est alors configuré pour vérifier l'authenticité de la puce 200 sur la base de la clef secrète, avant d'effectuer, ou non, l'action requise. A titre d'exemple, la clef secrète est stockée à distance, sur un serveur, et la puce 202 est configurée pour interroger le serveur à réception du message, par exemple en fournissant au serveur l'identifiant, afin que celui-ci lui fournisse la clef secrète.

Cependant ce protocole de communication est vulnérable face à des cyberattaques, telles que par exemple des attaques par relai ou par l'homme du milieu. De plus, ce protocole requière une gestion de clefs secrètes complexe. En particulier, afin que la clef secrète ne soit pas transmise lors de la communication NFC au lecteur 200, la gestion des clefs secrètes s'appuie par exemple sur une infrastructure de clefs publiques (en anglais « Public Key Infrastructure » - PKI). Les clefs secrètes sont alors stockées dans un serveur distant et sécurisé, par exemple en association de l'identifiant de la puce. Le protocole de communication requiert une connexion entre le lecteur et le serveur dans lequel sont stockées les clefs secrètes. Le lecteur 202 transmet au serveur distant le message chiffré, l'identifiant et la valeur de comptage. Le serveur connaissant la clé secrète de la puce 200, est capable de vérifier que le message chiffré a bien été généré à partir de la clef secrète de l'identifiant indiqué, en prenant en compte la valeur de comptage. L'incrémentation de la valeur de comptage à chaque nouvel emploi de la puce 200 évite les attaques par rejeu du message chiffré.

La figure 3A illustre l'émulation d'une communication en champ proche par un dispositif 300 comprenant un élément sécurisé 302 (SECURE ELEMENT). A titre d'exemple, le dispositif 300 est un smartphone. A titre d'exemple, l'élément sécurisé 302 comprend une émulation d'une puce similaire à la puce 202. Le dispositif 300 comprend en outre un circuit de contrôle 304 (NFC CTRL) configuré pour fournir les données transmises par un dispositif lecteur 306 vers le circuit sécurisé 302. L'élément sécurisé 302 est configuré pour communiquer directement avec le lecteur 306, sans l'intervention d'un processeur générique 310 (HOST CPU) du dispositif 300. En particulier, la communication en champs proche entre l'élément sécurisé 302 et le lecteur 306 s'effectue sans l'intermédiaire de l'exécution d'une application installée sur le dispositif 300. A titre d'exemple, une fois la transaction, entre l'élément sécurisé 302 et le lecteur 306, terminée, le processeur 310 a accès au statut de la transaction.

Dans l'exemple décrit en relation avec la figure 3A, une application, telle que l'application client décrite en relation avec la figure 1, du dispositif 300 n'a pas la possibilité d'initier une communication NFC par l'intermédiaire de l'élément sécurisé 302. En effet, l'accès à l'élément sécurisé 302 n'est généralement pas ouvert aux applications. L'application client ne peut donc pas bénéficier des avantages apportés par l'élément sécurisé 302. En particulier, l'application client ne peut pas bénéficier de la robustesse de l'élément sécurisé 302 face aux cyberattaques lors des communications NFC.

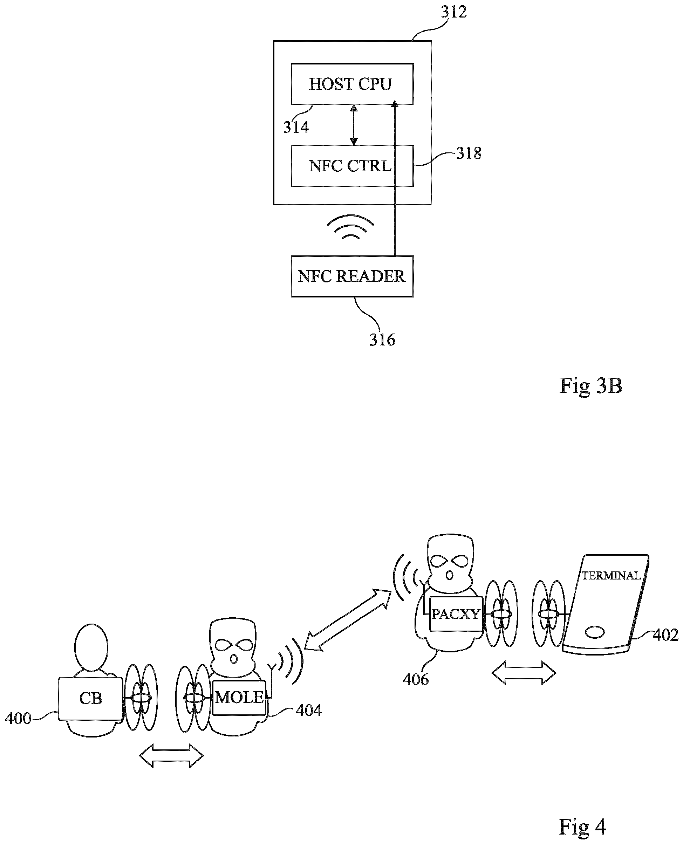

La figure 3B illustre l'émulation d'une communication en champ proche par un dispositif 312 comprenant une brique logicielle d'émulation NFC.

A titre d'exemple, un logiciel permettant l'émulation d'une puce NFC est installé dans une mémoire (non illustrée) du dispositif 312. A titre d'exemple, le logiciel d'émulation est issu de la technologie HCE (de l'anglais « Host Card Emulation »). A titre d'exemple, le logiciel est exécuté par un processeur générique 314 (HOST CPU) du dispositif 312 lors d'une transaction NFC avec un dispositif lecteur 316 (NFC READER). A titre d'exemple, le dispositif 312 comprend en outre un circuit de contrôle 318 (NFC CTRL) configuré pour fournir les données transmises du dispositif lecteur 316 vers le processeur 314, et/ou pour transmettre des données du processeur 314 vers le circuit de contrôle 318.

Un logiciel d'émulation de type HCE est facilement implémentable sur un dispositif tel qu'un smartphone et permet l'utilisation d'applications utilisant des protocoles de communication NFC. Cependant, l'utilisation d'un logiciel d'émulation rend le dispositif vulnérable aux cyberattaques.

La figure 4 illustre un exemple de cyber-attaque sur une communication sans fil entre deux dispositifs 400 (CB) et 402 (TERMINAL). En particulier, la figure 4 illustre une attaque relai sur le dispositif 400. Le dispositif 400 comprend, par exemple, une puce NFC. A titre d'exemple, le dispositif 400 est un moyen de paiement, tel qu'une carte bancaire ou un smartphone comprenant une application de paiement. A titre d'exemple, le dispositif 402 est un terminal de paiement électronique (TPE) configuré pour réaliser des transactions financières.

Une attaque par relai sur le dispositif 400 est par exemple effectuée par l'intermédiaire de deux attaquants et par l'intermédiaire d'un dispositif pirate 404 (MOLE) et d'un dispositif complice 406 (PROXY). Le dispositif lecteur 404 est placé à proximité du dispositif 400, par exemple à une distance inférieure à 50cm du dispositif 400. La puce NFC du dispositif 400 est alors alimentée par l'envoi d'une requête par le dispositif 404. Lorsque le dispositif 400 répond à la requête, le message émis par le dispositif 400 est transmis, par le dispositif lecteur 404, vers le dispositif complice 406. A titre d'exemple, le dispositif complice 406 est à portée du dispositif 402. A titre d'exemple, l'attaquant détenant le dispositif complice 406 fait mine de payer avec le dispositif 406 vers le dispositif 402. Le dispositif 406 transmet alors le message, du dispositif 400, vers le dispositif 402. Ainsi, le dispositif 402 croit que la transaction est effectuée par le dispositif 406 alors qu'elle est, en réalité, effectuée par le dispositif 400 et, par exemple, à l'insu du détenteur du dispositif 400.

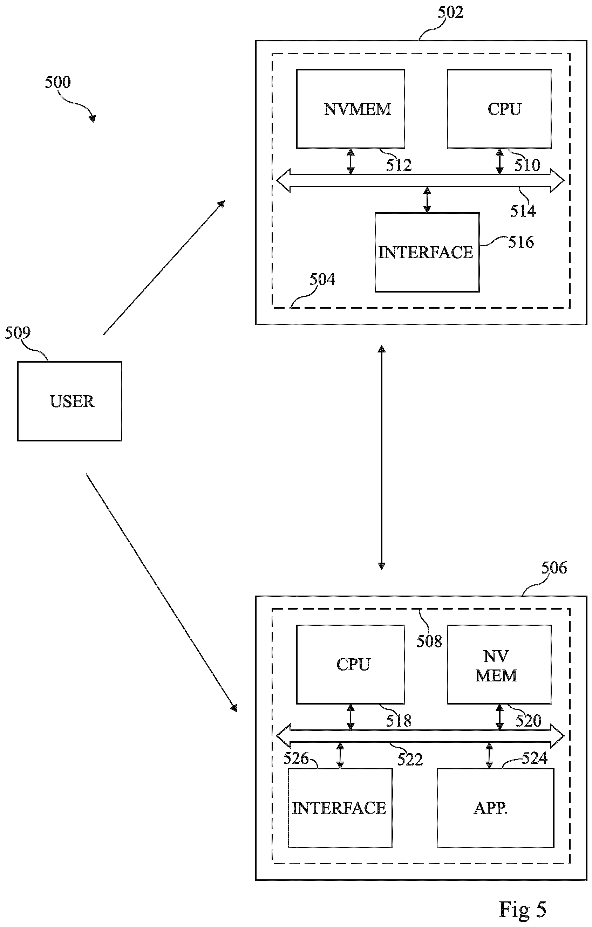

La figure 5 est un schéma par bloc illustrant un système 500 configuré pour mettre en oeuvre un procédé d'authentification, selon un mode de réalisation de la présente description. Le système 500 comprend, par exemple, un dispositif 502, tel que par exemple une borne de stationnement, un casier, ou un smartphone, comprenant une puce électronique 504 configurée pour réaliser des communications de type NFC. A titre d'exemple, la puce 504 comprend, ou est, un élément sécurisé.

Le système 500 comprend en outre un dispositif 506, tel que par exemple un smartphone, le dispositif 506 comprenant une puce électronique 508 configurée pour réaliser des communications de type NFC. A titre d'exemple, la puce 508 comprend une brique logicielle d'émulation NFC comme décrite en relation avec la figure 3B.

Le système 500 est configuré pour interagir avec un utilisateur 509 (USER). A titre d'exemple l'utilisateur est le détenteur du dispositif 506.

La puce 504, comprise dans le dispositif 502, comprend par exemple un processeur 510 (CPU) relié à une mémoire non volatile 512 (NVMEM) par l'intermédiaire d'un bus 514. Selon un mode de réalisation, le processeur 510 est configuré pour effectuer des opérations cryptographiques, telles que par exemple des opérations de cryptographie sur des courbes elliptiques. A titre d'exemple, la mémoire 512 est comprise dans un composant de sécurité matérielle, tel qu'un élément sécurisé, un module de plateforme sécurisé (en anglais « Trusted Platform Module »), un élément de stockage sécurisé, etc.

Selon un mode de réalisation, la mémoire 512 stocke la valeur d'au moins une clef secrète, telle que par exemple une clef secrète liée au fournisseur du service mis en oeuvre par le dispositif 502. La mémoire 512 stocke, par exemple, en outre, au moins une clef privée associée au dispositif 502 ainsi qu'une valeur secrète. La mémoire 512 stocke, par exemple, en outre au moins une clef publique, telle que par exemple une clef publique associée au dispositif 502. A titre d'exemple, la clef publique est stockée de manière chiffrée, par exemple en étant signée par la clef privée. A titre d'exemple, la mémoire 512 et le processeur 510 sont compris dans un élément sécurisé du dispositif 502.

Le dispositif 502 comprend, par exemple, en outre une interface 516 reliée au bus 514. A titre d'exemple, l'interface 516 est un clavier, un écran tactile, un scanner de QR code, etc.

La puce 508 comprend par exemple un processeur 518 (CPU) relié à une mémoire non volatile 520 (NVMEM) par l'intermédiaire d'un bus 522. Selon un mode de réalisation, le processeur 518 est configuré pour effectuer des opérations cryptographiques, telles que par exemple des opérations de cryptographie sur des courbes elliptiques.

La puce 508 comprend en outre une application 524 (APP.). A titre d'exemple, l'application 524 est une application logicielle installée dans une mémoire non volatile du dispositif 506 reliée au bus 522. L'application 524 est configurée pour, lorsqu'elle est exécutée par le processeur 518, générer des éléments, tels que par exemple des valeurs numériques et des phrases de récupération (en anglais « mnemonic phrases » ou « seed phrases »). A titre d'exemple, les phrases de récupérations sont des suites de mots, par exemple des suites d'entre 3 et 24 mots. Chaque mot d'une phrase de récupération est par exemple choisi aléatoirement dans une liste standard de mots, par exemple dans une liste de 2048 mots déterminés par le standard BIP39 (de l'anglais « Bitcoin Improvment Proposal 39 »). Dans un autre exemple, l'application 524 est configurée pour générer des codes à réponse rapide (en anglais « Quick Response Codes » - QR codes).

Le dispositif 506 comprend en outre une interface 526 (INTERFACE) permettant à l'utilisateur 509 d'interagir avec le dispositif 526. A titre d'exemple, l'interface 526 est un écran tactile, un clavier etc.

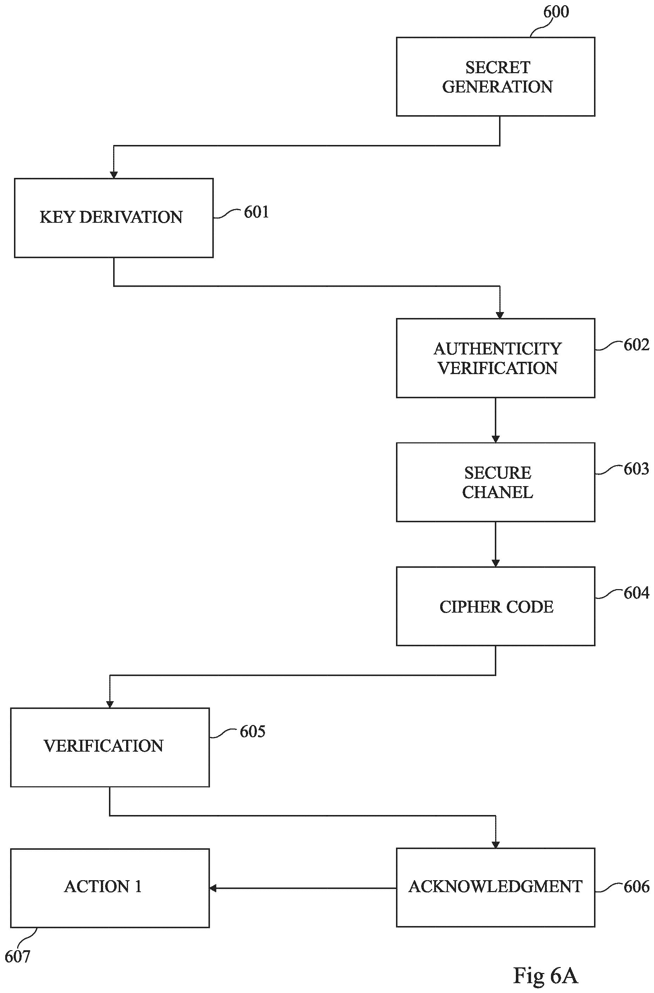

La figure 6A est un organigramme illustrant des étapes d'un procédé d'authentification. En particulier, l'organigramme de la figure 6A illustre des étapes pour la réalisation d'une première action par le dispositif 502. A titre d'exemple, la première action est le verrouillage d'un vélo dans une borne de stationnement, le verrouillage d'un casier ou plus généralement d'une porte. Dans un autre exemple, la première action est le déverrouillage d'un vélo, ou d'un véhicule, mis à disposition pour l'utilisateur 509. Dans un autre exemple, la première action est une validation ou une autorisation, par exemple pour entrer dans un site touristique.

Dans une étape 600 (SECRET GENERATION), l'utilisateur 509 lance par exemple l'exécution de l'application 524 sur le dispositif 506. A titre d'exemple, une valeur numérique *PIN,* telle qu'une valeur d'identification personnelle (de l'anglais « Personal Identification Number » - PIN) est générée par le dispositif 506 lors de la réalisation de l'étape 600. Dans un autre exemple, un code à réponse rapide est généré lors de la réalisation de l'étape 600. A titre d'exemple, la valeur numérique, ou le code, générée est accessible directement par l'utilisateur 509. A titre d'exemple, la valeur, ou le code, *PIN* est affichée sur un écran du dispositif 506. Selon un mode de réalisation, la valeur, ou le code, *PIN* est en outre stockée dans la mémoire 520.

Lors de la réalisation de l'étape 600, un autre élément *mnemonic* est généré lors de l'exécution de l'application 524. A titre d'exemple, l'autre élément *mnemonic* est une phrase de récupération comprenant, par exemple, entre 3 et 24 mots, par exemple 12 mots. La phrase de récupération *mnemonic* générée est, par exemple, directement stockée dans la mémoire 520. A titre d'exemple, la phrase de récupération n'est pas fournie à l'utilisateur 509.

Lors de la réalisation de l'étape 600, l'utilisateur 509 transmet la valeur, ou le code, précédemment générée par l'application 524, directement au dispositif 502. A titre d'exemple, l'utilisateur 509 saisit, par exemple manuellement, la valeur *PIN* par l'intermédiaire de l'interface. Dans un autre exemple, l'utilisateur 509 scanne, par l'intermédiaire du dispositif 502, le code à réponse rapide, par exemple en présentant le dispositif 506 à un lecteur du dispositif 502.

Le fait que ce soit l'utilisateur 509 qui fournisse directement la valeur ou le code au dispositif 502 prémuni le système 500 contre les attaques par l'homme du milieu.

Dans une étape 601 (KEY DERIVATION), le dispositif 502 utilise une clef privée *sk_{borne}* ainsi qu'une valeur secrète *chaincode_{borne},* en combination avec la valeur, ou le code, *PIN* fournie par l'utilisateur 509, afin de générer une clef privée *sk*_{*user*/}*_{borne}.* A titre d'exemple, la clef privée *sk*_{*user*/*borne*} est générée, par le dispositif 502, par application d'une fonction de dérivation de clefs sur la clef privée *sk_{borne},* la valeur secrète *chaincode_{borne}* et la valeur, ou le code, *PIN.* A titre d'exemple, la génération de la clef privée *sk*_{*user*/*borne*} est effectuée par le processeur 510 de manière sécurisée.

La clef privé *sk_{borne}* et la valeur secrète *chaincode_{borne}* sont des valeurs stockées dans la mémoire 512, par exemple lors de la fabrication, ou lors de la mise en service du dispositif 502. Ces valeurs sont, par exemple, des valeurs propres au dispositif 502. Dans l'exemple où le dispositif 502 est une borne de stationnement, un casier, etc. chaque borne et/ou casier comprend une clef privée et une valeur secrète différentes des celles stockées dans les autres dispositifs semblables.

Le dispositif 502 comprend, par exemple, en outre une clef publique *pk_{borne}*, ainsi qu'une clef privée *skₘₐₛₜₑᵣ* associée au détendeur du dispositif 502. Les clefs *pk_{borne}* et *skₘₐₛₜₑᵣ* sont par exemple stockées de manière sécurisée dans la mémoire 512. Dans un autre exemple, la clef publique *pk_{borne}* prend la forme d'un certificat électronique.

Une clef publique *pkₘₐₛₜₑᵣ,* associée à la clef secrète *skₘₐₛₜₑᵣ,* est, par exemple, en outre stockée dans la mémoire 520 du dispositif 506. A titre d'exemple, la clef publique *pkₘₐₛₜₑᵣ* est stockée dans la mémoire 520 lors de l'installation de l'application 524.

Lors de l'étape 601, le dispositif 506 génère en outre, par exemple de manière sécurisée, une clef publique *pk*_{*user*/}*_{borne}.* A titre d'exemple, la clef publique *pk*_{*user*/*borne*} est le résultat de la multiplication d'un point d'une courbe elliptique par la valeur de la clef privée *sk*_{*user*/}*_{borne}.* A titre d'exemple, le point de la courbe elliptique utilisé est le point générateur de ladite courbe elliptique. La courbe elliptique sur laquelle est effectuée le calcul est, par exemple, définie en amont et est une courbe elliptique adaptée à la mise en oeuvre d'échange de clefs selon un protocole de Diffie-Hellman.

L'étape 601 comprend en outre la signature électronique de la clef publique *pk_{borne},* par exemple par la clef privée *skₘₐₛₜₑᵣ.* L'étape 601 comprend en outre la signature électronique de la clef publique *pk*_{*user*/}*_{borne},* par exemple par la clef privée *sk_{borne}.*

L'étape 601 comprend, par exemple, en outre, la transmission des clefs *pk_{borne}* et *pk*_{*user*/*borne*} signées au dispositif 506. A titre d'exemple la transmissions des clefs signées est effectuée par une communication NFC entre les dispositifs 502 et 506.

Dans une étape 602 (AUTHENTICITY VERIFICATION), le dispositif 506, par l'intermédiaire de l'exécution de l'application 524, vérifie l'authenticité du dispositif 502. La vérification de l'authenticité du dispositif 502 comprend, par exemple, la vérification de la signature de la clef publique *pk_{borne}.* La vérification s'effectue par exemple, sur la base de la clef *pkₘₐₛₜₑᵣ,* stockée, par exemple, dans la mémoire 520. Dans le cas où cette vérification échoue, le procédé se termine en échec et la communication entre les dispositifs 502 et 506 est rompue. A titre d'exemple, lorsque le procédé se termine en échec, la valeur *PIN* est supprimée du dispositif 502 et les clefs *pk_{borne}* et *pk*_{*user*/*borne*} signées sont supprimées du dispositif 506. A titre d'exemple, les éléments générés lors des étapes 600 et 601, tels que la phrase de récupération *mnemonic,* et les clefs *sk*_{*user*/*borne*} et *pk*_{*user*/}*_{borne},* sont supprimés des mémoires des dispositifs 502 et 506.

Lorsque la vérification de la signature numérique de la clef publique *pk_{borne}* réussit, l'étape 602 se prolonge en la vérification de la signature de la clef *pk*_{*user*/}*_{borne}.* A titre d'exemple, suite à la vérification de la signature numérique de la clef *pk_{borne},* la valeur de la clef *pk_{borne}* est connue par le dispositif 506. La vérification de la clef *pk*_{*user*/*borne*} est par exemple réalisée par l'intermédiaire de l'exécution de l'application 524 et sur la base de la clef *pk_{borne}.* Dans le cas où la vérification de la signature de la clef *pk*_{*user*/*borne*} échoue, le procédé se termine en échec. Lorsque la vérification de la clef *pk*_{*user*/*borne*} réussit, la clef publique *pk_{borne},* la phrase de récupération *mnemonic* et la valeur, ou le code, *PIN* sont, par exemple, stockés dans la mémoire 520. A titre d'exemple, la phrase de récupération *mnemonic* et la valeur, ou le code, *PIN* sont stockées dans la mémoire 520 en association, et/ou par exemple indexées par la clef publique *pk_{borne}.*

A titre d'exemple, la communication NFC entre les dispositifs 502 et 506, en particulier la transmission des clefs *pk_{borne}* et *pk*_{*user*/*borne*} signées, est réalisée dans une niche en métal, par exemple en aluminium afin de contrecarrer une attaque par relai. A titre d'exemple, la niche en métal est accolée, ou fait partie, du dispositif 502. A titre d'exemple, les clefs *pk_{borne}* et *pk*_{*user*/*borne*} signées sont affichées, par exemple sous forme de codes à réponse rapide, sur l'interface 516 et sont scannées par l'utilisateur 509.

Dans une étape 603 (SECURE CHANNEL), une clef secrète *ephemeralkey* est générée par le dispositif 506 afin de créer un canal sécurisé avec le dispositif 502.

Selon un mode de réalisation, par l'intermédiaire de l'exécution de l'application 524, la phrase de récupération *mnemonic* est utilisée pour générer une valeur *masterkey.* A titre d'exemple, la valeur *masterkey* est une valeur de 64 octets. Selon un mode de réalisation, les octets, par exemple les 64 octets, de la valeur *masterkey* sont divisés en au moins 5 parties. Par exemple, une première partie de 32 octets constitue une clef privée *sk*_{*phone*/*borne*} et les 32 autres octets sont utilisés pour définir quatre valeurs d'authentifiant *authN*1*, authN*2*, authN*3 et *authN*4*,* chacune de, par exemple 8 octets. Ainsi, la valeur *masterkey,* générée à partir de la phrase de récupération, est une concaténation de la clef privée *sk*_{*phone*/*borne*} et des valeurs d'authentification *authN*1 à *authN*4*.* Bien que l'exemple d'une valeur de 64 bits, découpées en une clef de 32 octets et 4 identifiants de 8 octets, est données, d'autres tailles et d'autres découpages peuvent bien sûr être envisagés. A titre d'exemple, les octets 0 à 31 de la valeur *masterkey* définissent la clef privée *sk*_{*phone*/}*_{borne};* les octets 32 à 39 définissent la valeur d'authentification *authN*1 ; les octets 40 à 47 définissent la valeur d'authentification *authN*2 *;* les octets 48 à 55 définissent la valeur d'authentification *authN*3 ; et les octets 56 à 63 définissent la valeur d'authentification *authN*4*.*

Selon un mode de réalisation, la clef secrète *ephemeralkey* est générée par le dispositif 506, lors de l'exécution de l'application 524, sur la base de la clef privée *sk*_{*phone*/*borne*} et de la clef publique *pk*_{*user*/}*_{bone}.* A titre d'exemple, la clef secrète *ephemeralkey* est obtenue par multiplication sur la courbe elliptique du point défini par la clef publique *pk*_{*user*/*borne*} par le scalaire déterminé par la valeur de la clef privée *sk*_{*user*/}*_{borne}.* A titre d'exemple, la multiplication de la clef *pk*_{*user*/*borne*} par la clef *skuser*/*phone* résulte en un point sur la courbe elliptique. Le point obtenu est donc défini par deux coordonnées (*ephemeralkey*(*x*)*,ephemeralkey*(*y*)). A titre d'exemple, la clef secrète *ephemeralkey* est égale à la coordonnée *ephemeralkey*(*x*)*.* Il est bien sûr tout à fait possible que la clef secrète *ephemeralkey* soit égale à la coordonnée *ephemeralkey(y).* La clef secrète *ephemeralkey* est alors utilisée pour chiffrer les communications transmises par le dispositif 506 vers le dispositif 502.

Une clef publique *pk*_{*phone*/*borne*} est en outre générée lors de l'exécution de l'application 524. A titre d'exemple, la clef publique *pk*_{*phone*/*borne*} est un point de la courbe elliptique comprenant deux coordonnées, le point étant issu du résultat de la multiplication du point *G*, générateur de la courbe elliptique considérée, par le scalaire défini par la clef privée *sk*_{*phone*/*borne*}.

Dans une étape 604 (CIPHER CODE), un code secret est déterminé. A titre d'exemple, l'utilisateur 509 n'a pas la main sur le choix du code secret. A titre d'exemple, le code secret est déterminé comme étant une partie de la valeur *masterkey* générée. A titre d'exemple, le code secret est égal à la valeur d'authentification *authN*1*.* D'autres possibilités sont bien sûre envisageables. En effet, le code secret peut aussi être égal à une valeur parmi les valeurs *authN*2*, authN*3 ou *authN*4*.*

A titre d'exemple, par l'intermédiaire de l'exécution de l'application 524, le code secret est concaténé avec une des autres valeurs d'authentification. A titre d'exemple, la valeur d'authentification *authN*1 est concaténée avec la valeur d'identification *authN*2*.* La concaténation du code secret avec la valeur d'identification, par exemple *authN*2*,* est ensuite chiffrée par la clef secrète *ephemeralkey* résultant en une valeur *cipher_codelock.*

Un message comprenant la valeur *cipher_codelock* et les deux coordonnées de la clef publique *pk*_{*phone*/*borne*} est ensuite transmis, par communication NFC, au dispositif 506.

A titre d'exemple, le message transmis comprend en outre un code d'authentification de message (MAC - « Message Authentication Code »), ou un code d'authentification de message de hachage à clef (HMAC - « Hash-based Message Authentication Code »), chiffré avec la coordonnée non utilisée du point calculé pour la génération de la clef secrète. A titre d'exemple, le MAC, ou le HMAC, est généré sur la base de la coordonnée *ephemeralkey(y).* A titre d'exemple, le MAC ou le HMAC est un haché cryptographique et sa génération comprend le calcul d'une somme de vérification (en anglais « checksum »).

Dans une étape 605 (VERIFICATION), le dispositif 502 génère de son côté la clef secrète *ephemeralkey.* La génération de la clef secrète *ephemeralkey* s'effectue, par exemple, à partir de la clef publique *pk*_{*phone*/*borne*} reçue lors de la réalisation de l'étape 604. La clef secrète *ephemeralkey* est par exemple une coordonnée du point (*ephemeralkey*(*x*)*,ephemeralkey*(*y*), par exemple la coordonnée *ephemeralkey*(*x*), obtenu par multiplication sur la courbe elliptique du point défini par la clef publique *pk*_{*phone*/*borne*} par le scalaire défini par la valeur de la clef privée *sk*_{*user*/*borne*}.

A titre d'exemple, le code MAC, ou HMAC, généré et reçu lors de la réalisation de l'étape 604, est par exemple vérifié en utilisant l'autre coordonnée, par exemple la coordonnée *ephemeralkey(y)* générée par le dispositif 502.

A titre d'exemple, si la vérification du code MAC, ou du code HMAC, échoue, alors le procédé se termine en échec.

Lorsque la vérification du code MAC, ou du code HMAC, réussit, la valeur chiffrée *cipher_codelock* est stockée dans la mémoire 512 du dispositif 502.

Dans une étape 606 (ACKNOWLEDGMENT), le dispositif 506 chiffre une valeur, par exemple la valeur *PIN,* ou une valeur issue du code à réponse rapide. A titre d'exemple, le chiffrement s'effectue sur la base de la clef secrète *ephemeralkey.*

A titre d'exemple, le chiffrement s'effectue sur la valeur *PIN,* ou sur une valeur issue du code à réponse rapide, concaténée avec une autre valeur. A titre d'exemple, cette autre valeur correspond au 8 octets de poids fort de la clef privée *sk*_{*user*/}*_{borne}.* Plus généralement, l'autre valeur est une valeur connue par les dispositifs 502 et 506.

La valeur chiffrée lors de la réalisation de l'étape 606 est alors transmise, par communication NFC, au dispositif 506. Le dispositif 506 est alors configuré, par l'intermédiaire de l'exécution de l'application 524, pour déchiffrer la valeur chiffrée reçue. A titre d'exemple, le déchiffrement s'effectue sur la base de l'application d'un algorithme de chiffrement symétrique utilisant la clef secrète *ephemeralkey.* Le dispositif 506, est alors configuré pour comparer la valeur déchiffrée avec la valeur *PIN,* ou avec le code à réponse rapide. A titre d'exemple, la vérification s'effectue par comparaison des premiers octets, par exemple les octets précédant les 8 derniers octets de la valeur déchiffrée, avec la valeur *PIN,* ou le code à réponse rapide.

Dans un exemple, le dispositif 506 est en outre configuré pour communiquer à l'utilisateur 509 la valeur, ou les premiers octets de la valeur déchiffrée. A titre d'exemple, la communication à l'utilisateur s'effectue par affichage sur l'interface 526. L'utilisateur 509 vérifie alors si la valeur communiquée correspond par exemple à son code *PIN,* généré lors de la réalisation de l'étape 600. Si les valeurs ne correspondent pas, l'utilisateur 509 indique, par exemple par l'intermédiaire de l'interface 526, que les valeurs ne correspondent pas, et le procédé se termine en échec. Si les valeurs correspondent, l'utilisateur 509 indique, par exemple par l'intermédiaire de l'interface 526, que les valeurs correspondent, validant ainsi l'authentification entre les deux dispositifs 502 et 506.

Le dispositif 506 est alors configuré, par l'intermédiaire de l'exécution de l'application 524 et lorsque les valeurs correspondent, pour transmettre une valeur de validation *ACK,* chiffrée par la clef secrète *ephemeralkey.* A titre d'exemple, la valeur de validation *ACK* est concaténée avec une des valeurs d'authentification, par exemple avec la valeur *authN*3*,* avant d'être chiffrée par la clef secrète *ephemeralkey.*

La valeur de validation, par exemple concaténée, chiffrée est ensuite transmise, par communication NFC, au dispositif 502.

Le dispositif 502 est alors configuré pour déchiffrer, par l'intermédiaire de la clef secrète *ephemeralkey,* la valeur reçue lors de la réalisation de l'étape 606 et pour la comparer, ou pour comparer les premiers octets correspondant au nombre d'octets formant la valeur de validation *ACK,* de la valeur déchiffrée avec la valeur de validation *ACK.* A titre d'exemple, la valeur de validation *ACK* a été stockée dans la mémoire 512 en amont, par exemple lors de la fabrication, ou lors de la mise en service, du dispositif 502.

A titre d'exemple, dans le cas où la valeur *ACK* déchiffrée ne correspond pas à la valeur stockée, le procédé se termine en échec. Lorsque la valeur *ACK* déchiffrée correspond bien à la valeur stockée, le procédé continue dans une étape 607 (ACTION 1). L'étape 607 comprend la réalisation d'une action, telle que le verrouillage, ou le déverrouillage, du vélo ou du véhicule de l'utilisateur 509, le verrouillage de la porte du casier, la validation de l'entrée de l'utilisateur 509 dans un site touristique etc., par le dispositif 502.

A titre d'exemple, suite à la réalisation de l'étape 607, la clef secrète *ephemeralkey* n'est pas gardée dans une quelconque mémoire des dispositifs 502 et 506.

Suite à la réalisation de l'étape 607, le dispositif 506 garde en mémoire la valeur ou le code, *PIN,* la phrase de récupération *mnemonic* et la clef publique *pk*_{*user*/*borne*}. Le dispositif 502 garde en mémoire la valeur chiffrée *cipher_codelock.* A titre d'exemple, le dispositif 502 garde en mémoire la valeur chiffrée *cipher_codelock* déchiffrée par l'intermédiaire de la clef secrète *ephemeralkey.* A titre d'exemple, les autres valeurs, transmises et/ou générées par l'un et l'autres des dispositifs 502 et 506, sont supprimées des mémoires 512 et 520.

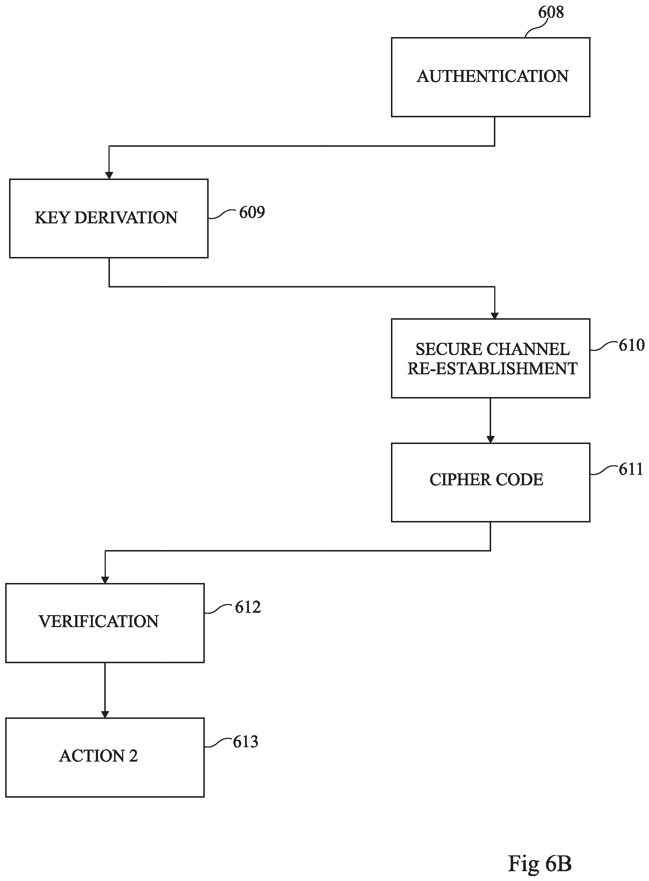

La figure 6B est un organigramme illustrant des étapes d'un procédé d'authentification, selon un mode de réalisation de la présente description.

A titre d'exemple, les étapes décrites en relation avec la figure 6B sont réalisées lorsque l'utilisateur vient récupérer son vélo ou véhicule sur la borne de stationnement, ou vient reposer le véhicule qui lui était mis à disposition, ou vient récupérer des affaires mises dans le casier, ou encore lorsque l'utilisateur 509 sort du site touristique qu'il visitait etc.

Une étape 608 (AUTHENTICATION) est par exemple réalisée par l'initiative de l'utilisateur 509. A titre d'exemple, l'utilisateur 509 se présente, avec le dispositif 506, au dispositif 502. A titre d'exemple, par l'intermédiaire de l'exécution de l'application 524, le dispositif 506 transmet une requête par communication NFC au dispositif 502.

A titre d'exemple, le dispositif 502 est configuré pour exposer la clef publique *pk_{borne}* signée par la clef privée *skₘₐₛₜₑᵣ* au dispositif 506. A titre d'exemple, le dispositif 502 expose un certificat numérique comprenant la valeur de la clef publique *pk_{borne}* signée par la valeur de la clef *skₘₐₛₜₑᵣ.* A titre d'exemple, la clef publique *pk_{borne}* signée, ou le certificat, est transmise par communication NFC. Dans un autre exemple, la valeur est par exemple affichée sur l'interface 516, par exemple sous la forme d'un code à réponse rapide et l'utilisateur 509 présente le dispositif 506 afin de scanner le code.

Le dispositif 506, par l'intermédiaire de l'exécution de l'application 524, est alors configuré pour vérifier l'authenticité du dispositif 502 en utilisant la clef publique *pkₘₐₛₜₑᵣ,* stockée dans la mémoire 520, par exemple, lors de l'installation de l'application 524.

Dans le cas où la vérification de l'authenticité du dispositif 506 échoue, le procédé se termine en échec.

Lorsque la vérification de l'authenticité réussit, une requête, pour la réalisation de la deuxième action, est transmise par le dispositif 506 vers le dispositif 502.

A titre d'exemple, la requête comprend la transmission de la valeur, ou du code, PIN au dispositif 502. A titre d'exemple, la valeur est transmise en clair par communication NFC.

Dans une étape 609 (KEY DERIVATION), le dispositif 502 génère à nouveau la clef privée *sk*_{*user*/*borne*} sur la base de la valeur, ou du code, *PIN* reçue lors de la réalisation de l'étape 608, de la clef privée *sk_{borne}* et de la valeur secrète *chaincode_{borne}.* A titre d'exemple, la clef privée *sk*_{*user*/*borne*} est obtenue par application d'une fonction de dérivation de clef sur la valeur, ou code, *PIN,* la clef privée *sk_{borne}* et la valeur secrète *chaincode_{borne}*.

La clef privée *sk*_{*user*/*borne*} regénérée, de façon déterministe, est ensuite, par exemple, signée par la clef privée *sk_{borne}*. La clef privée *sk*_{*user*/*borne*} signée est alors transmise, par communication NFC, au dispositif 506.

Dans une étape 610 (SECURE CHANNEL RE-ESTABLISHMENT), le dispositif 506, par l'intermédiaire de l'exécution de l'application 524, regénère la valeur *masterkey* à partir de la phrase de récupération *mnemonic,* conservée en mémoire. Le dispositif 506 regénère en outre la clef secrète *ephemeralkey* ainsi que la clef publique *pk*_{*phone*/}*_{borne}.* La réalisation de l'étape 610 est identique à la réalisation de l'étape 603. A titre d'exemple, un code MAC, ou un code HMAC, est en outre généré à partir de la coordonnée *ephemeralkey*(*y*), ou *epehemeralkey*(*x*) le cas échéant.

Dans une étape 611 (CIPHER CODE), le dispositif 506 génère un nouveau code secret *codeunlock.* Le nouveau code secret est égal au code secret *codelock,* généré lors de la réalisation de l'étape 604. Autrement dit, le nouveau code secret *codeunlock* est égal à la valeur d'authentification *authN*1*,* regénérée lors de la réalisation de l'étape 610. Le nouveau code secret *codeunlock,* est ensuite concaténé avec une valeur différente de celle concaténée avec la valeur du code *codelock* lors de la réalisation de l'étape 604. A titre d'exemple, le nouveau code *code_unlock* est concaténé avec la valeur d'authentification *authN*4*.* La concaténation des deux valeurs est ensuite chiffrée par l'intermédiaire de la clef secrète *ephemeralkey* , résultant en une valeur chiffrée *cipher_codeunlock.* Ainsi, bien que les deux codes secrets *codelock* et *codeunlock* soient identiques, les valeurs chiffrées *cipher_codelock* et *cipher_codeunlock* diffèrent.

Un message comprenant le code chiffré *cipher_codeunlock,* la clef publique *pk*_{*phone*/}*_{borne},* regérénérée lors de la réalisation de l'étape 610, ainsi que le code MAC, ou HMAC, généré, par exemple sur la base de la coordonnée *ephemeralkey(y),* est fournie au dispositif 502.

Dans une étape 612 (VERIFICATION), le dispositif 502 estime par exemple le temps écoulé entre la transmission du message et sa réception. Le dispositif 502 est alors configuré pour comparer le temps estimé avec un laps de temps de référence. A titre d'exemple, le laps de temps de référence est une durée inférieure à 1 seconde, par exemple de l'ordre de plusieurs millisecondes. Si le temps estimé est supérieur au laps de temps de référence, le procédé se termine en échec. Dans le cas où le temps estimé est bien inférieur au laps de temps de référence, le dispositif 502 regénère la clef secrète *ephemeralkey.* La génération de la clef secrète *ephemeralkey* est réalisée de manière identique à la génération réalisée dans l'étape 605. Le dispositif 502 vérifie alors par exemple l'intégrité du code MAC, ou HMAC, reçu en le déchiffrant à l'aide de la coordonnée *ephemeralkey(y),* ou *ephemeralkey*(*x*) le cas échéant, aussi regénérée lors du calcul de la clef secrète *ephemeralkey.* Si l'intégrité du code MAC, ou HMAC, n'est pas vérifiée, le procédé se termine en échec. Si le code MAC, ou HMAC, est bien intègre, le dispositif 502 déchiffre le code chiffré *cipher_codeunlock.* Le dispositif 502 déchiffre en outre le code chiffré *cipher_codelock,* conservé en mémoire suite à la réalisation de l'étape 607.

Le dispositif 502 est alors configuré pour comparer les premiers octets, par exemple le nombres d'octets correspondant à la taille des valeurs d'authentification, par exemple les 8 premiers octets des codes *cipher_codeunlock* et *cipher_codelock* déchiffrés. Si les deux éléments comparés, normalement égaux à la valeur d'authentification *authN*1*,* ne correspondent pas, le procédé se termine en échec. Si les deux éléments comparés correspondent, et par conséquent sont tous les deux égaux à la valeur *authN*1*,* le dispositif 502 compare les octets restants, par exemple les 8 dernier octets, des codes *cipher_codeunlock* et *cipher_codelock* déchiffrés. Si les octets restants des codes *cipher_codeunlock* et *cipher_codelock* déchiffrés sont égaux, le procédé se termine en échec.

Si les octets restants des codes *cipher_codeunlock* et *cipher_codelock* déchiffrés diffèrent, le procédé continue dans une étape 613 (ACTION 2). En effet, pour que le procédé ne se termine pas en échec, les derniers octets des codes *cipher_codeunlock* et *cipher_codelock* déchiffrés doivent différer, les uns étant par exemple égaux à la valeur *authN*2 et les autres à la valeur *authN*4*.* En effet, si les derniers octets des codes *cipher_codeunlock* et *cipher_codelock* déchiffrés sont égaux, cela traduit qu'une attaque par rejeu a possiblement lieu.

La réalisation de l'étape 613 consiste par exemple en la réalisation de la deuxième action.

A titre d'exemple, suite à la réalisation de l'étape 614, la valeur, ou le code, PIN, la phrase de récupération *mnemonic* et la clef publique *pk*_{*user*/}*_{borne},* ainsi que toutes les autres valeurs et éléments générés lors de la réalisation des étapes 608 à 613, sont supprimés de la mémoire 520. De même, le code chiffré *cipher_codelock,* conservé dans la mémoire 512 suite à la réalisation de l'étape 607, est supprimé de la mémoire 512, ainsi que toutes autres valeurs générées et reçues lors de la réalisation des étapes 608 à 613. Autrement dit, suite à la réalisation de l'étape 614, les clefs *skₘₐₛₜₑᵣ, sk_{borne}* et la valeur *chaincode_{borne}* sont conservées dans la mémoire 512 et la clef *pkₘₐₛₜₑᵣ* est conservée dans la mémoire 520.

A titre d'exemple, toutes les opérations effectuées par le dispositif 502 sont effectuées de manière sécurisée, par exemple dans un élément matériel sécurisé du dispositif 502.

Les étapes décrites en relations avec les figures 6A et 6B peuvent être réalisées en parallèle entre le dispositif 506 et plusieurs dispositifs similaires au dispositif 502. Dans ce cas, les valeurs, ou codes, ainsi que les phrases de récupération générées par le dispositif 506, diffèrent pour chaque dispositif similaire au dispositif 502. Ainsi, toutes les autres valeurs et clefs générées lors de la réalisation des étapes décrites en relation avec les figures 6A et 6B diffèrent entre chaque dispositif similaire au dispositif 502.

A titre d'exemple, par exemple lorsque la première action consiste au déverrouillage d'un véhicule d'une borne de stationnement et la deuxième action consiste en le verrouillage du véhicule dans une borne de stationnement, le dispositif 502 avec lequel est effectué la première action peut différer du dispositif 502 avec lequel est effectué la deuxième action. Dans ce cas, l'utilisation de la clef *sk_{borne}* est remplacée par l'utilisation de la clef *skₘₐₛₜₑᵣ* et seul un certificat auto-signé est exposé lors de la réalisation de l'étape 601. Dans ce cas, la clef publique *pk_{borne}* ne diffère pas d'un dispositif 502 à l'autre.

Dans certains cas, c'est un autre utilisateur d'un dispositif 506 distant du dispositif 502 qui communique la clef publique *pk_{borne},* la valeur, ou le code, *PIN* et *mnemonic* à un autre utilisateur ayant un dispositif semblable au dispositif 506 à portée du dispositif 502. A titre d'exemple, les étapes décrites en relation avec la figure 6A sont réalisées avec un utilisateur différent de celui présent pour la réalisation des étapes décrites en relation avec la figure 6B. Cet exemple a par exemple lieu lorsque l'utilisateur 509 souhaite prêter son véhicule qu'il a stationné dans une borne de stationnement à un tier.

Un avantage des modes de réalisation décrits est qu'ils permettent une communication robuste face à la plupart des cyber-attaques connues.

Un autre avantage des modes de réalisation décrits est que leur réalisation est effectuée sans connexion à un quelconque réseau. Ainsi, la réalisation des modes de réalisation décrits est aussi possible en zone blanche. En particulier, la communication NFC ne fait pas appel à une PKI (de l'anglais « Public Key Infrastructure »).

Un avantage des modes de réalisation décrit est que le nombre d'éléments gardés en mémoire des dispositifs 502 et 506 est restreint.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Les valeurs utilisées pour les concaténations sont données à titre d'exemple et ne sont pas limitatives.

Enfin, la mise en oeuvre pratique des modes de réalisation et variantes décrits est à la portée de la personne du métier à partir des indications fonctionnelles données ci-dessus. En particulier, pour ce qui est de la présence et l'utilisation d'un composant de sécurité matériel, tel qu'un élément sécurisé, dans le dispositif 506. Il est bien sûr envisageable que les calculs effectués par le dispositif 506 soient faits dans un environnement sécurisé.

## Revendications

1. Procédé d'authentification entre un premier dispositif (506) et un deuxième dispositif (502), le procédé comprenant :
- la génération, par le premier dispositif, d'un premier élément (*PIN*) et d'un deuxième élément (*mnemonic*), et leur stockage dans une mémoire du premier dispositif ;
- la fourniture du premier élément, par l'intermédiaire d'un utilisateur du premier dispositif, au deuxième dispositif ;
- la génération, par le deuxième dispositif, sur la base du premier élément et par application d'un protocole de Diffie-Hellman, d'une première clef publique (*pk_{user\borne}*) ;
- la fourniture de la première clef publique au premier dispositif et le stockage de la première clef publique, en association des premier et deuxième éléments, dans une mémoire (520) du premier dispositif ;
- la génération, par le premier dispositif, d'une clef de session (*ephemeralkey*)*,* sur la base du deuxième élément et de la première clef publique, par application d'un protocole de Diffie-Hellman sur une courbe elliptique ;
- la génération, par le premier dispositif, d'un premier code (*codelock*)*,* sur la base du deuxième élément, et son chiffrement par la clef de session ;
- la génération, par le premier dispositif, d'une deuxième clef publique (*pk*_{*phone*/*borne*}) ;
- la fourniture, par une communication en champs proche, du premier code chiffré (*cipher_codelock*) et de la deuxième clef publique au deuxième dispositif ;
- la génération, par le deuxième dispositif, de la clef de session, sur la base du premier élément et de la deuxième clef publique, et le déchiffrement du premier code chiffré, à l'aide de la clef de session ;
- le stockage, dans une mémoire (512) du deuxième dispositif, du premier code déchiffré ;
- la commande, par le deuxième dispositif, d'un premier actionneur suite à une authentification du deuxième dispositif, ou d'un troisième dispositif, par le premier dispositif et sur la base de la première clef publique.

2. Procédé d'authentification selon la revendication 1, comprenant en outre :
- la génération, par le premier dispositif, d'un deuxième code (*codeunlock*), sur la base du deuxième élément, et son chiffrement par la clef de session et la fourniture, par communication en champs proche, du deuxième code chiffré (*cipher_codeunlock*) au deuxième, ou au troisième, dispositif ;
- le déchiffrement, par le deuxième, ou le troisième, dispositif, du deuxième code chiffré et la comparaison du deuxième code déchiffré avec le premier code déchiffré ;
- sur la base de la comparaison entre les premier et deuxième codes déchiffrés, la commande, par le deuxième dispositif ou par le troisième dispositif, du premier ou d'un deuxième actionneur.

3. Procédé selon la revendication 2, dans lequel la commande du premier actionneur provoque une action de verrouillage, ou de déverrouillage, du deuxième dispositif (502) et la commande du deuxième actionneur provoque une action de déverrouillage, ou de verrouillage du deuxième, ou du troisième, dispositif.

4. Procédé selon l'une quelconque des revendications 1 à 3, dans lequel la première clef publique (*pk*_{*user*/*borne*}) est fournie, par le deuxième dispositif (502), au premier dispositif (506) par l'intermédiaire d'une communication en champs proche non sécurisée.

5. Procédé selon l'une quelconque des revendications 1 à 4, dans lequel le premier élément (*PIN*) est un code numérique et dans lequel la fourniture du premier élément au deuxième dispositif (502), par l'intermédiaire de l'utilisateur consiste en la saisie, par l'utilisateur, du code numérique sur un clavier du deuxième dispositif.

6. Procédé selon l'une quelconque des revendications 1 à 4, dans lequel le premier élément est un code à réponse rapide et dans lequel la fourniture du premier élément au deuxième dispositif (502), par l'intermédiaire de l'utilisateur consiste en la présentation du code à réponse rapide à un lecteur de code à réponse rapide du deuxième dispositif.

7. Procédé selon l'une quelconque des revendications 1 à 6, dans lequel le deuxième élément est une valeur aléatoire comprenant un nombre N de mots compris dans un dictionnaire standard de mots encodant de l'entropie, par exemple la proposition d'amélioration du BitCoin 39, N étant un entier compris entre 3 et 24.

8. Procédé selon l'une quelconque des revendications 1 à 7, dans lequel, la clef de session (*ephemeralkey*) est effacée des premier et deuxième dispositifs (502, 506) suite à la réalisation de la première action, et dans lequel la clef de session est générée à nouveau, par le premier dispositif, puis par le deuxième, ou le troisième, dispositif, suite à l'authentification du deuxième, ou du troisième, dispositif, par le premier dispositif.

9. Procédé selon l'une quelconque des revendications 1 à 8, comprenant en outre, avant la génération, par le premier dispositif (506), de la clef de session (*ephemeralkey*)*,* l'authentification du deuxième dispositif (502), par le premier dispositif et sur la base de la première clef publique (*pk*_{*user*/*borne*}) et sur la base d'une clef maitre (*pkₘₐₛₜₑᵣ*)*.*

10. Procédé selon l'une quelconque des revendications 1 à 9, comprenant en outre, avant la réalisation de la première action :
- le chiffrement, par le deuxième dispositif, du premier élément (*PIN*)*,* et la fourniture du premier élément chiffré au premier dispositif ;
- le déchiffrement, par le premier dispositif, du premier élément chiffré et la comparaison entre le premier élément déchiffré et le premier élément ; et
- si le premier élément déchiffré et le premier élément ne correspondent pas, l'arrêt du procédé.

11. Procédé selon l'une quelconque des revendications 1 à 10, comprenant en outre suite à la génération du premier code (*codelock*)*,* la fourniture d'un code d'authentification de message au deuxième dispositif.

12. Procédé selon la revendication 11, dans lequel le code d'authentification de message est une des coordonnées, sur la courbe elliptique, de la clef de session (*ephemeralkey*).

13. Procédé selon la revendication 2, ou l'une quelconque des revendications 3 à 12, dans sa dépendance de la revendication 2, comprenant en outre, suite à la fourniture du premier code chiffrés (*cipher_codelock*) et/ou du deuxième code chiffré (*cipher_codeunlock*) :
- l'estimation, par le deuxième, ou le troisième, dispositif (502), du temps écoulé entre l'envoi, par le premier dispositif (506) du code chiffré et la réception, par le deuxième dispositif, du code chiffré ;
- la comparaison, par le deuxième, ou le troisième, dispositif, du temps écoulé estimé et une valeur seuil ; et
- si le temps écoulé estimé est supérieur ou égal à la valeur seuil, l'arrêt du procédé.

14. Procédé selon la revendication 2, ou l'une quelconque des revendications 3 à 13 dans sa dépendance de la revendication 2, dans lequel le premier code (*codelock*) est une concaténation d'une première partie d'une valeur (*masterkey*) générée sur la base du deuxième élément avec une deuxième partie de la valeur et dans lequel le deuxième code est une concaténation de la première partie de la valeur avec une troisième partie de la valeur.

15. Système comprenant un premier et un deuxième dispositif (506, 502) configurés pour réaliser le procédé selon l'une quelconque des revendications 1 à 14.

16. Système selon la revendication 15, dans lequel le premier dispositif (506) est un téléphone intelligent.
